# EUROPEAN PATENT SPECIFICATION

(11) **EP 1 533 346 B1**
(45) Date of publication and mention of the grant of the patent: **14.05.2008**
(21) Application number: 04004859.7
(22) Date of filing: 02.03.2004
(51) Int. Cl.: C09D 7/12, C09D 7/02, C09D 7/14

(54) **Paint formulations containing hectorite clay and phosphonate additives**
Anstrichzusammensetzungen enthaltend Hectorit-Ton und Phosphonat-Zusätze
Compositions de peintures contenant de l'argile hectorite et des additifs phosphonates

(30) Priority: 21.11.2003 US 717443
(43) Date of publication of application: 25.05.2005
(73) Proprietor: Elementis Specialties, Inc., Hightstown, New Jersey 08520 (US)
(72) Inventor: Bradford, Chris, Warrington, PA 18976 (US); Ijdo, Wouter, West Windsor, NJ 08550 (US); Smith, Douglas, 50996 Köln (DE); Konstadinos, Markou, 50739 Köln (DE); Bungarten, Jörg, 50767 Köln (DE)
(74) Representative: Metten, Karl-Heinz

(56) References cited:
- WO-A-96/14347
- US-A- 5 582 638
- US-A1- 2003 047 117

## Description

### FIELD OF INVENTION

The present invention is directed to paint formulations containing hectorite clay additives that improve many of the properties of the formulations. Such paints include aqueous based paint formulations used as metallic coatings and as straight shade-coatings for automobiles. The paint formulations are also particularly useful in commercial uses that involve spray application of paint which include general industrial paints, wood spraying, and marine painting and are particularly useful for any paint spray application in an automated production line.

### BACKGROUND OF INVENTION

Automotive manufacturers are a major consumer of paint formulations and the application of these formulations is a highly developed, sophisticated science. Beyond automotive, most parts in modem industrial equipment require some manner of coating or painting to enhance the appearance and/or protection of the parts. In most modem applications the part requires several coats to optimize the appearance and/or protection.

Spraying of paint is the conventional application method in almost all production fields. Conventional OEM paint technology for the application of multiple coats has required systems that often include multiple spray stations and individual booths for the multiple coats to be applied The booths are typically located in series connected by a moving conveyor.

These spray systems have a fixed throughput, are highly computerized and require the entire system to be activated even if only one process of the system is required. To overcome the challenges of consistent application, appearance and performance in these systems, the science of paint additives has reached a high degree of sophistication and has almost become a separate field of scientific endeavor. The present invention is focused on the special rheological and viscosity needs of paint that is to be spray applied. Typical spray applications include, besides automotive manufacture, industrial OEM, marine and ship painting, military specified uses including Mil-spec and military specified coatings, general industrial uses of all kinds, and wood coatings.

Additives are an important component of such paint formulations. They provide key properties such as suspension, sag control, flow and leveling, atomization, metal control and overall consistency of application. Hectorite clay, a smectite clay, is a commercially important mineral. Appropriately processed, hectorite clays have been used as excellent viscosifiers, in paints and coatings for decades. Hectorite is essentially a 2:1 type layer silicate. It is colloidal and readily swells in water to form viscous, thixotropic gels which renders the clay useful as a viscosity builder. For instance, hectorite is used today to provide rheological control in coatings, cosmetics, drilling muds, greases, suspension aids, agricultural uses and the like.

The assignee hereof is the owner of the hectorite mine in Hector, California from which the clay gets its name. Natural hectorite clays are products that are formed through hydrothermal alteration of pyroclastics or by the decomposition of igneous rocks over many thousands of years. By hectorite clay, we mean to include all types of hectorite clays; we also use the term to include the related trioctahedral clay minerals, saponite and stevensite.

Clays are relatively abundant in the enviromnent and their chemical composition varies from deposit to deposit. These chemical variations result in differences in clay layer- charge, composition and density, impurity content and crystallite (layer) sizes. Hectorite clay, however, is a relatively rare clay, and can generally be found in a sodium form and a calcium form in nature, the latter of which is not considered in general as commercially valuable. Hectorite has also been found containing magnesium and lithium ions.

The sodium form of hectorite has long been considered to be the most useful and this is the clay mined primarily in Hector, California. Hectorite clays are usually designated by their majority or plurality exchange cation, which can be sodium or calcium for instance, although the exchange cation content of hectorite is only a very small part of its compositional weight. Some prior art patents distinguish alkali hectorite clays (sodium hectorite) from alkaline earth metal hectorite clays (calcium hectorite). Almost all natural hectorite clay however contains both calcium and sodium cations. In crude hectorite clay as mined in Hector, California, the vast majority of the exchange ions are sodium ions.

Clays have been synthesized on an industrial scale and hectorite is no exception. Such synthetic hectorite clays are uniform in cation, charge type and density and are virtually impurity free. These synthetic clays are sold under a variety of trade names such as Laponite by Rockwood Industries. These synthetic hectorite clays behave differently from natural hectorite clays when used as, for instance, a rheological additive in paints and coatings.

Crude natural hectorite clay as mined includes both clay and impurities. Such a crude clay can be beneficiated or purified so that some or most of the impurities in the crude clay have been removed.

Most hectorite clay is sold as a fine powder to industrial customers. As with most minerals, however, these powders are difficult and expensive to handle. To provide the user of the clay with a product which is more ready for the user's application, hectorite has also been sold in aqueous slurries. Such slurries can be easily stored, shipped, transferred, e.g. pumped and metered, with fewer problems than are associated with dry mineral powders. Generally, however, it is not economical or practical to ship hectorite clays as aqueous slurries because of the low level of clay and large quantity of water that is present in such slurries.

It is customary in the painting of an automobile that a series of coatings be applied to the metal body of the car by spraying apparatus. The first coat is usually a cathodic electrocoat followed by a primer-surfacer, the basecoat and finally a clearcoat. The basecoat provides the aesthetics such as color or special effects to the finish via the creative use of organic and inorganic pigments. In the majority of modem day automobile finishes, a metallic finish is desired. To obtain this metallic effect, metallic pigments are added to the basecoat. Typically these are aluminum flakes although glass, copper, mica and interference pigments have been used. The aluminum flakes in the basecoat contribute to the lustrous appearance of the final finish which appeals to automotive customers. The appearance and quality of the final finish define modem life to many people and is a critical component to the commercial quality in the marketing of cars.

The increasing concern about volatile organic emissions into the atmosphere continues to drive much of the intensive effort in research and development of coatings for automotive applications. The development of coatings that contain mainly water as the solvent is a focal technology for these efforts.

To obtain the desired optical effect of the metallic flakes in waterborne basecoat and waterborne basecoat and waterborne one coat systems, it has up to now been believed that a correct precise combination of an acrylic copolymer with synthetic hectorite (and perhaps a solvent blend) had to be utilized to obtain proper rheology and metallic particle control, particularly for spray applications. Hectorite clay, however, has been used in the past as an ingredient in some metallic automotive base coats. See BASF U.S. Patents No. 6,277,188 5,168,105 and 5,166,255 for example. Hectorite clay either in powder form or in a pregel with water has been incorporated into base coats to provide rheological properties to the base coat - it has not, in fact, been commercially successful and today most metallic base coats use a combination of synthetic hectorite, at times treated or coated with tetrasodiumpyrophosphate (TSPP), and acrylic polymer thickeners in such paint formulations. TSPP is considered the most effective product for treating synthetic hectorite. However, TSPP can hydrolyze slowly to orthophosphate which is not a desired paint ingredient.

Recent DuPont U.S. Patent No. 6,451,896 describes an aqueous coating composition useful as a metallic coating containing an inorganic layered silicate composition as a rheological additive which is comprised of a water-dilutable polyurethane resin, hectorite (either natural or synthetic), water and optionally organic solvents. The amount of the hectorite is from 0.1% to 1.5% of the coating; of particular note is that the patent specifically teaches that synthetically prepared layered silicates, denoting synthetic hectorite, are preferred for such coating.

The use and desire of the marketplace for more and more special effect pigments requires the development of specific coating compositions for each special effect pigment and paint line in the market place. This places a great cost burden on the automotive manufacturer and their coatings suppliers who are driven by the twin goals of improvement in a highly visible, aesthetic products and lowering cost to the customer.

Among other prior art that is pertinent to the present invention are the following patents.

U.S. Patent No. 6,024,790 discloses an alkaline earth bentonite (unusually defined to include hectorite) whereby calcium and/or magnesium is replaced by sodium, not at the mine site as at present with bentonite, but in actual use by customers or immediately prior thereto, through the use of sodium citrate or other organic sequestering agents. Dry blends of the sequestering agent and bentonite are disclosed. Paper and pulp then have the treated clay incorporated into their formulation.

U.S. Patent Application No. 20030047117, assigned to the assignee of this application, describes a clay slurry using smectite clay, water and defined phosponate additives. The slurry is particularly useful as an anti-bleed additive tor concrete and cement/sand systems. The patent application also discusses use of the clay slurries to provide rheology to water-based paints.

U.S. Patent No. 5,391,228 shows the use of sodium chloride to convert calcium bentonite [Example 9] to make an additive for paper slurries, which process yields similar results to starting with sodium bentonite.

U.S. Patent No. 5,582,638 describes a thickening agent based on a synthetic phyllosilicate and a group of specific organic phosphorous salts for a wide variety of liquid flowable coating systems including applications by spraying or rolling. With the use of the product described in the patent, the rheology of the large number of systems described (including printing inks, lubricating greases, fertilizer suspensions, etc.) can be adjusted, in particular viscosity, stability (anti-settling effect, syneresis) and layer thickness (anti-sagging action).

U.S. Patent No. 5,266,538 discloses a smectite clay in an elevated solids aqueous slurry that is composed of smectite clay slurried or dispersed in water containing a non-dispersant salt of a monovalent cation, such as sodium chloride. This patent teaches that a dispersant salt results in high viscosity since the dispersant end of the molecule tends to disperse loose aggregates of smectite.

U.S. Patent No. 5,151,218 discloses phosphoric acid esters and their salts that can be used as dispersants or dispersing aids in paints and molding compositions.

WO 96/14347 A1 discloses a pigment dispersing additive in the form of a copolymer comprising alternating untis of a vinyl monomer and a diester of a dicarboxylic acid in which at least one of the esterifying groups comprises a polyether group and wherein said copolymer has an acid value of less than one. These pigment dispersing additives can be used with coating compositions which in addition to a passivated aluminium flake pigment also contain hectorite clay and fumed silica together with a urethane associative thickener and an acrylic emulsion. The copolymers of WO 96/14347 A1 have been found to be useful as vehicles in which to prepare pigment dispersions, in particular when the pigment to be dispersed comprises a so-called "flake" pigment, that is, a metallic or a metallic-effect pigment.

### SUMMARY OF INVENTION

### DETAILED DESCRIPTION OF INVENTION

The objective of the present invention is the creation of improved paint formulations that include an additive based on natural hectorite clay most preferably sodium hectorite clay.

As stated above, aluminum flake-like pigments are used extensively in automotive coatings to provide a metallic look to the coating of the car body. This visual effect provides an important appeal to car customers who in modem times have come to demand die optical satisfaction that metallic paint provides. Such aluminium pigments are slightly reactive in an aqueous environment a basic pH and require special attention that their positioning, when the paint dries, produces the best optical and lustrous effect on the automobile. While the invention hereof is particularly useful for aluminum containing metallic paints and coatings, other metallic paints containing copper, mica, and interference pigments (wherein, for example, mica encapsulated with other substances such as titanium dioxide so that the color of the paint varies depending upon the angle of the viewer) with or without aluminum are also a part of our invention.

Metallic basecoats containing such aluminum flake-like pigments, and other paints that are applied by spraying to a surface, are often thickened or stabilized with an alkali swellable thickener (ASE) such as Ciba Specialty Chemicals Bradford, United Kingdom division's Viscalex HV30. Although this may provide acceptable flow for paints and spray applications it alone does not typically provide the metal control required for today's special effects, high performance, compliant coatings(for example, orientation of the metallic flake pigment). For this typically a synthetic hectorite clay is also incorporated and, more specifically, a synthetic hectorite such as Laponite RD from Rockwood Specialties, Inc. of Princeton, New Jersey or Optigel SH from Sud Chemie GmbH, Munich, Germany.

We believe the advantages offered by natural hectorite are an improved balance of thixotropic flow with good recovery times, an effective yield point, excellent suspension control, good circulation stability, improved sag control and good visco-thermal stability. Compared to synthetic hectorite materials, natural hectorite clays having a larger particle size and correspondingly reduced edge area for interaction are particularly effective for these applications. However, up to now such clays have had certain disadvantages as they require very high shear for full dispersion and cannot be used as dry powder additions to paint formulation. Pre-gels of the clay dispersed in water typically have been tried and these tend to post thicken to non-pumpable pastes on storage. Moreover, the water demand of the clays means that gels can only be produced at low solids contents (<4% by weight); otherwise they are also unworkable pastes. The low solid content means that natural hectorite gels bring a lot of water into the formulation which can detract from the system characteristics and limits their use significantly.

As discussed, attempts have been made to overcome some of the problems of natural hectorite by the use of synthetic clay usually incorporating TSPP. However the resulting gels are only stable for a few days after which they set into firm pastes. When incorporated into metallic coatings they have a strong tendency to post thicken on storage which severely limits shelf-life. Moreover, when used in certain metallic coatings synthetic hectorites promote the generation of gas, perhaps due to an interaction with the surface treatment of the metallic pigment.

The present invention is therefore directed to paint formulations using defined phosphonate additives which in synergistic combination with natural hectorite allow easier access to the full potential of natural hectorite and provide unexpected improved properties to the paint formulations. Such formulations are designed to be used in industrial OEM applications and more specifically the automated and spray booth application processes of industrial customers, particularly automotive manufacturers. Spray booths and automated processes that can benefit from the paint formulations described herein include those used in wood spraying, marine painting, a variety of general industrial applicators and military equipment painting such as the painting of naval vessels, trucks and tanks.

Such improvement can in many cases eliminate the need for the complex combination of alkali swellable thickeners and synthetic hectorite presently used in many paints. The invention hereof can replace synthetic hectorite completely in all applications, and in many cases, either eliminate the need for or diminish the amount used of an alkali swellable thickener.

One embodiment of the invention is a paint formulation comprising:
(a) at least 0.1 wt.% of natural hectorite;
(b) from 0.5 to 15 wt.% based on the weight of the hectorite clay of one or more phosphonates; and
(c) water.

It is of course well known that paint formulations contain a wide variety of other ingredients including colored and metallic pigments, binders, crosslinking resins, surfactants, solvents and other chemicals, and all such paint formulations are encompassed by our definition of paint formulation.

In a preferred embodiment, the hectorite clay is a natural hydrous phyllosilicate and includes all the natural hectorite clays. Such clays include calcium and sodium hectorites (and include even rare hectorites such as magnesium and lithium hectorite), as well as hectorites that contain mixtures of exchange ions, such as both calcium and sodium exchange cations.

Naturally occurring hectorite clay often contains impurities - in calculation of the percentages below only the pure clay portion of either crude clay or beneficiated clay, either of which can be used in this invention, is utilized. Hectorite clay of high purity is preferred; hectorite containing a fairly large amount of impurities such as calcite is also useful.

One idealized formula for hectorite is given in U.S. Patent Nos. 5,718,841 and 5,735,943 issued to the assignee of the instant invention.

Commercial natural hectorite, also often called sodium hectorite clay, is available from Elementis Specialties' Hector Mine, near Newberry, California. Hectorite is a member of the smectite group of clay minerals, a family of layered swellable clays. Hectorite, produced at Elementis Specialties mine in Newberry, California, is a trioctahedral clay, more precisely a sodium magnesium lithiosilicate. The most preferred hectorite for this invention is obtained from the Hector Mine in Hector, California and has the idealized formula shown below:
The formula for this hectorite clay is: M_{0.66}[Si₈(Mg_{5.34}Li_{0.66})(OH)₄O₂₀] , where M is >80% sodium cations; when beneficiated the hectorite has typically more than 94% sodium cations.
Beneficiated hectorite clay, like BENTONE® HC available from Elementis Specialties, is almost 99% active natural hectorite clay, although some calcite still remains. Crude commercial hectorite clay, such as BENTONE CT, contains around 50 percent clay while the remainder is impurities, predominantly calcite.
The preferred hectorite clay from the Hector Mine is described in "Papers presented at the 10th Industrial Minerals International Conference May 17-20, 1992" entitled "Hectorite, Deposits, Properties and Uses by I.E. Odom, pages 105-111 along with other varieties of sodium and calcium hectorite clay useful for this invention.
Hectorite is also available for a small number of other companies including American Colloids and IMV Corporation, a Nevada company, as well as the Vanderbilt Company.

While no upper limit is specified for the amount of hectorite useful for this invention, a preferred range of hectorite is between 0.1% to 10% wt. %. In some applications a top useful limit of about 10% of hectorite is believed to exist.

Phosphonate additives which are useful for this invention include the phosphonic and phosphinic derivatives within the group of organic phosphorus oxoacids. In this invention, we use the more generally accepted definition of phosphonic acid as being an organic phosphorus derivative such as RPO(OH)₂.

Organic derivatives useful as dispersant additives in the production of the inventive paint formulations can be selected from the group consisting of
(a) Phosphonic acid compounds that contain at least two moieties having the structure: 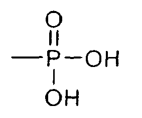 and salts thereof,
(b) Phosphinic acid compounds that contain at least two moieties having the structure: 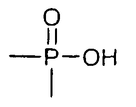 and salts thereof,
(c) Compounds which may form phosphonic or phosphinic acids, or salts thereof, under the conditions of use in making these paint formulations, and
(d) The lithium, sodium, potassium, calcium or magnesium salts of the compounds described under (a) and (b).

Particularly useful are the organic phosphorus derivatives with the following formula:
a) Diphosphonic acids of formula R¹R²C(PO(OH)₂)₂ and salts thereof,
b) Diphosphonic acids of formula R¹-CR²(PO(OH)₂)-R³-CR²PO(OH)₂-R⁵ and salts thereof,
c) Phosphonic acids with general formula R¹R⁴C=C(PO(OH₂)₂. and salts thereof, and
d) The lithium, sodium, potassium, calcium and magnesium salts of the compounds described under a), b) and c),
where R¹ can be selected from the group consisting of H, a linear or branched alkyl, alkene, hydroxyalkyl, aminoalkyl, hydroxyalkene, aminoalkene with 1 to 22 carbon atoms or an aryl, hydroxyaryl, aminoaryl with 6 to 22 carbon atoms; R² is selected from the group consisting of R¹ and OH; R³ is an alkyl with 0 to 22 carbon atoms; and both R⁴ and R⁵ is selected from the group R¹.

Preferred additives for this invention are the sodium salts of the above and most preferred is 1-hydroxyethane-1,1-diphosphonic acid sodium salt or an ester thereof Such products include the commercial products Dequest 2010, 2016 and 2016D. The especially preferred phosphonate additive for this invention is 1-hydroxyethylene-1,1-diphosphonic acid tetra sodium salt (CAS# 3794-83-0).

The paint formulations according to the present invention preferably contain, based on the hectorite clay weight content, from 0.5 to 15 wt.%, preferably 3 to 6 wt.% of phosphonate additive. The phosphonate additive may be added to the paint in the form of a solution or powder, preferably it is added to the paint formulation as a water pre-mix composition with the hectorite.

Without being bound by any particular theory, the hectorite composition is speculated to have the phosphonate additive chemisorbed on the clay layer edges upon exposing the additive to the clay either before mixing into the paint formulation or with the paint formulation itself It is further believed that the additives form a negatively charged layer on the clay platelet edges by chemisorption of the phosphonate on such layer edges.

As stated, the preferred method for making the paint formulations of this invention is to first pre-mix the natural hectorite with phosphonate. A representative example of making a pre-mix is described in Example 1. If water is used in the pre-mix manufacture, spray drying the resultant product produces a hectorite/phosphonate powder which can easily be added to the paint formulation as is itself a preferred embodiment. As other options, a paint formulation company can separately mix natural hectorite and the phosphonate additive into a paint formulation.

It is speculated that in a paint formulation, the phosphonate dispersant salt reduces the viscosity besides making the dispersion of the natural hectorite simpler. For example, phosphonate salt is more stable to hydrolysis whereas a phosphate such as TSPP material is not. Since the hydrolysis product of TSPP is ineffective in reducing clay slurry viscosity, application of the more stable phosphonate salt is preferred. The stability of the phosphonate salt is also important when used in coatings of this invention, as this additive can be dispersed in water before incorporation into the inventive paint formulation.

In addition to the superior rheology provided by natural hectorite, the presence of the phosphonate with natural hectorite in a paint formulation, where metallic flakes are also present, results in a favorable optical orientation of the flakes. Again without being bound to a theory, it is believed that this occurs by an attachment mechanism with both the hectorite platelets and the metal flakes. Unlike synthetic hectorite, the dispersion of the trillions of these very small individual hectorite moieties is achievable optimally with natural hectorite. This similar dispersion of hectorite in other contexts has been called defoliation or exfoliation. The size and shape of the aluminum flakes compared to the size and shape of natural hectorite may be synergistically effective optically while synthetic hectorite is not, or is much less so.

According to the present invention, several other approaches are available to the production of the hectorite composition beyond a preferred spray dried powder (see Example 1), all of which are included in our invention. For example, one could disperse either unbeneficiated (i.e. natural hectorite with impurities) or beneficiated hectorite clay with the additive of this invention in water. Alternatively, dried clay and the additive can be added to make a clay water slurry. Conversely, sufficient additive could be added to a clay slurry of lower solids where after the slurry could be concentrated. For instance, concentration is achieved when the slurry is "partially" dried to drive of water till a desired solids content is reached. In another embodiment of the present invention, it may be desirable to first purify crude hectorite and use it at such a solids level in the presence of the additive so that the purified clay slurry would contain around 20 wt.% clay.

In summary, we have thus discovered that treatment of natural hectorite clay with specific phosphonates allows the formation of what we call a superdispersible clay. This greatly enhances the ease of dispersion and allows unexpectedly the formation of stable pre-gels with concentrations up to at least 14% in water. Concentrations up to 18% have been obtained which while not pourable can be used. It has been found that in some instances it can also be of advantage to make the pre-gel in a blend of ethanol:water (1:4) to increase the rate of activation.

Surprisingly these gels do not show the typical tendency to post-thicken strongly on storage. When this clay is then used as a replacement for the alkali type of product or the synthetic hectorite product or the combination presently used in an automotive base-coat, metal control (and higher volume solids) is surprisingly significantly improved and to a much greater extent than can be achieved from synthetic hectorite clay. This is expected to be an advantage to the automotive industry.

The products of this invention can easily be incorporated by paint companies, and by their manufacturing personnel, into existing paint formulations now using synthetic hectorite with only slight modifications easily within the skill of the typical paint processing employee. The use of the product based on the natural hectorite clay allows much better suspension control in the paint formulation and surprisingly better stability against syneresis. These features may be caused by the high elastic component in the products containing the hectorite. Those paint formulations containing the natural hectorite product of this invention have a better balance between viscous and elastic behaviour. It seems likely that this balance ensures good suspension along with stability against syneresis. The invention also facilitates the whole production process by reducing the amount of water required to achieve full dispersion and also easing the dispersion itself. As the gel is a well dispersed, low viscosity pregel, it can be post-added to a formulation: attempts to do this with the synthetic hectorite and natural hectorite without phosphonate lead to an inhomogeneous product and seeding in the paint. Just the post add feature alone will save automotive paint companies substantial time and money in production latitude and quality costs when compared to synthetic hectorite additives.

As discussed, it is of use in certain formulations to use the natural hectorite composition described above with a traditional alkali swellable thickener used in metallic automotive and other types of paint formulations. Such thickeners are most often alkali-swellable emulsions (ASE) and are polymers made by the polymerization of an ionic monomer such as methacrylic acid, or dialkylaminoalkyl methacrylate and acrylamide or/and a non-ionic monomer with optionally a crosslinking agent and an allyl ether. Such polymers are insoluble in water and soluble or swellable in alkali fluids.

Commercially usefully alkali swellable thickeners include Viscalex HV30, Plextol SD, ASE-60 made by Rohm & Haas, Latekoll D, a thickener made by BASF and EA 3017, a thickener sold by Elementis Specialties, Inc. U.S. Patent No. 4,892,916 discloses a variety of other useful polymers for such alkali swellable thickeners.

Of particular relevance and totally unexpected is the improvement in application properties and productivity window enabled by the use of the new product. Normally, metal control in automotive basecoats is highly dependent on the applied film thickness. Coatings are spray applied and thin (12 - 15 µm). However if the thickness increases only a few microns, the optical effects can be diminished. Astonishingly, using the new product, films with over 24 µm thickness displayed the same excellent metal control. This is a tremendous advantage to the industry as it allows much more flexibility during manufacture and better opportunity for the "first time quality" (FTQ) of the coatings.

Another aspect of this invention is the key discovery that the viscosity recovery time of the paint formulation containing the natural hectorite additive of this invention is very close (estimated 20 seconds) to the precise time for the aluminum flakes in the paint to "set" optically for maximum aesthetic effect. The reason mixtures of acrylic and synthetic hectorite have been required is likely because the recovery time of the (acrylic) was instantaneous while the other (synthetic hectorite) was greater than 200 seconds. Paint formulators were required to mix these chemicals together by trial and error to try to reach the paint-set "sweet spot". Hectorite naturally appears to provide the "sweet spot" because of its natural physical and chemical properties.

Additionally this invention provides paints that have better atomization at the paint spray nozzle head, increased sag tolerance and, most importantly, higher volume of solids in the formulations - it is solids in paint that deliver the pigment and the metallic look not the fluid portion. The atomization improvement and increase in solids volume is particularly important in the automotive industry.

In a second embodiment limited to metallic coating formulations for automotive manufacture, it has been found that synthetic hectorite can be improved by use of the phosphonate additives of this invention. While not preferred, in view of our conclusion that natural hectorite, because of its physical chemistry (which provides better optical orientation of the metal flakes to maximize their aesthetic effect) and its optimum rheological performance - has advantages compared to synthetic hectorite, we believe that use of synthetic hectorite with phosphonate additives will provide a diminished but yet effective metallic automotive paint formulation.

The following examples are provided to illustrate our invention. Other embodiments of the invention will be apparent to those skilled in the art from consideration of the specification and practice of the invention disclosed herein. It is intended that the specification and examples be considered as exemplary only, with a true scope and spirit of the invention being indicated by the claims.

### EXAMPLES:

### Example 1

**This example describes a representative example of a method to make the useful hectorite composition of this invention.**

Hectorite clay mined at the Hector mine (located in the central portion of the Mojave desert in San Bernardino County, California) contains significant amounts of both hectorite clay and calcite whereas quartz and dolomite are present in minor qualities in the crude clay ore. The amount of calcite that accompanies the hectorite clay varies depending on where the ore is excavated within the open pit. Interestingly enough, the hectorite clay composition itself is remarkably constant. A typical hectorite clay unit cell formula is: M⁺_{0.66} [Mg_{5.34}Li_{0.66}]Si₈O₂₀(OH)₄ where M⁺ denotes the exchange cations. An analysis of more than 10 samples show that the unprocessed, crude clay as mined contains about 91% Na⁺, 6% Ca²⁺ and 3% K⁺ cations as the exchange ions.

Since the clay concentration varies, the ore is stockpiled into several piles. Each pile is mixed thoroughly to homogenize and then analyzed for clay content and clay slurry yield strength. Based on these data, a consistent blend is produced by mixing certain amounts of each stockpile. The blend typically contains about 50 percent hectorite clay with the rest impurities, and this blend is then refined.

A typical hectorite beneficiation process starts out by first dispersing hectorite ore powder in water. Depending on the viscosity of the obtained slurry, tetra sodium pyrophosphate salt (TSPP) is added to reduce the slurry viscosity. Typically, about one weight percent TSPP (based on crude clay ore weight basis) is added to the clay slurry. The slurry is centrifuged to remove most of the calcite and other impurities. Some of the TSPP complexes with the Ca²⁺ ions and this complex salt is also removed from the clay slurry during centrifugation. An analysis of the beneficiated clay slurry shows that the hectorite clay now contains about 96% Na⁺ cations as exchangeable ions. The clay lattice composition remains unaltered during the process.

In the production of the hectorite additive of this invention, one method is to add a 1-hydroxyethylidene-1,1-diphosphonic acid tetra sodium sah to the centrifuged clay slurry. Next, the slurry is spray dried into a mixture in powder form and packed. This product contains about three weight percent of this phosphonate dispersant salt with the rest hectorite clay and is a preferred component to make the inventive paint formulations of this invention.

### Example 2

### Evaluation of the hectorite compositions of this invention in comparison to synthetic hectorite in metallic basecoats.

This example shows the initial development of test formulations for waterborne metallic basecoats. It used paints that contain the common ASE acrylic thickener Viscalex HV30 in combinations with synthetic hectorite (Laponite RD) and a natural hectorite composition and a hectorite composition of this invention. The findings of this example led to the conclusions shown in Example 3, which details later results.

For this we first developed starting formulations with these different acrylic thickeners alone. Then we replaced 25% and 50% of the solid acrylic thickener by the clays. Another alkali swellable polymer similar to Viscalex sold by Elementis Specialties also was tested - we designated this EA 3017. This product is a copolymer of butyl acrylate, methyl methacrylate and acrylic acid. See Tables 1 and 2.

In these examples the application conditions were not optimized and used equal loadings often considered not optimum.

### Procedure:

All formulations were spray applied with the spraymation Erichsen type 480. The gun was from Sata type P 90. Steer-air-presure was 4.0 bar, spray-air-pressure was 4.5 bar. We applied the basecoats on aluminum panels in two spray-coats. After the first coat the panels were flashed with an ambient temperature air shower at approx. 1 bar until matt; between 180 sec and 220 sec. The flash process was repeated after the second spray pass.

As a first step we applied all basecoats under same conditions. This means we adjusted the DIN4 flowcup-viscosity to 33-37 sec and the flow-rate obtained with the setting of the gun of 3.1.0.

Afterwards we varied the flow-rate at the gun to get comparable thicknesses to be able to evaluate the metal control between the samples. This is because experience would indicate that improved metal control is achieved at lower basecoat film thicknesses.

All panels were clear-coated with Permacron 2K-MS Brillant from Spiess Hecker at approx. 50µm and cured at 80°C for 20min.

### Formulations BU 29/1-7:

This early evaluation demonstrated in this basecoat thickened with Viscalex HV 30 an improvement in metal-control with all clays in two ratios (table 3 to 6). Noticeable here was that at a ratio of AC-thickener: clay=1:1, after four days one had to adjust the viscosity with deionized water, which indicates a slight post- thickening/bodying effect. The basecoat with the synthetic hectorite (BU 29/7) was after this period actually gel-like.

From tables 4 to 6 the clays worked approximately at the same level for metal control. For this all film thicknesses were the same. There was no major difference from the Viscalex HV 30 standard (table 4). By comparing the 3:1 and 1:1 replacements among each other (table 5 and 6) the synthetic hectorite in this system worked insignificantly better than natural hectorite (Bentone EW) and the natural hectorite of this invention (the natural hectorite/additive of the invention).

### Formulations 30/1-7:

In this basecoat thickened with natural hectorite of this invention the differences between the clays regarding the metal control are distinct (tables 7 to 10). Clear to see here is the outstanding performance of the hectorite in both ratios when coaling thickness was constant (tables 9-10). The synthetic hectorite was the weakest grade not only because of worst metal control (tables 9-10) but also because of the poorer storage stability (table 7). This was seen as the gel-like effect after 4 days. This effect was so strong in the 1:1 blend that the basecoat was nearly unusable. The overall performance of our natural hectorite was better than synthetic hectorite at comparable film thicknesses.

### Conclusion:

Natural hectorite/phosponate showed an outstanding performance regarding metal control and results in a superior paint formulation. Basecoats with synthetic hectorite generally showed a poorer storage stability even after 4 days, which appears in a gel-like effect.

Synthetic hectorite also can be replaced by the hectorite/phosponate composition when application is optimized as known in the art. Also both the acrylic thickeners tested can be replaced at least up to 50% by the clays. It is also believed the acrylic thickener in the paint formulations can be replaced completely by the additive of this invention.

The change in quality of metal control achieved with the clay depends somewhat on the acrylic thickener used. The effect was more pronounced with the EA 3017 acrylic product.

**Table 1 - TEST FORMULATION WITH VISCALEX HV 30**

| | | | BU 29/1 | BU 29/2 | BU 29/3 | BU 29/4 | BU 29/5 | BU 29/6 | BU 29/7 | | |
|---|---|---|---|---|---|---|---|---|---|---|---|
| | | | *Weight* in *%* | | | | | | | | |
| *POSITION* | *Raw material* | | | | | | | | | *Lot* | *Supplier* |
| | ***Operation 1**: Put in POS.1* | | | | | | | | | | |
| 1 | Hydrolac W 8185 | | 4,9 | 4,9 | 4,9 | 4,9 | 5,1 | 5,1 | 4,9 | 03G0001 | Eckart |
| | | | | | | | | | | | |
| | | ***Operation 2**:Premix POS.2-5 under stirring for 10 min. in the listed order* | | | | | | | | | |
| 2 | Butylglycol | | 3,9 | 3,9 | 3,9 | 3,9 | 4,1 | 4,1 | 3,9 | | |
| 3 | DISPERSE | AYD®W30 | 0,5 | 0,5 | 0,5 | 0,5 | 0,5 | 0,5 | 0,5 | 960402323 | Elementis |
| 4 | N-Methylpyrolidon | | 1,0 | 1,0 | 1,0 | 1,0 | 1,0 | 1,0 | 1,0 | | |
| 5 | N-Butanol | | 1,8 | 1,8 | 1,8 | 1,8 | 1,9 | 1,9 | 1,8 | | |
| | | ***Operation 3** : Mix Operation 2 in Operation 1 for 15 min. under stirring* | | | | | | | | | |
| | | ***Operation 4**: Mix POS. 6+7under stirring with dissolver at 6m*/*s for 10 min. in the listed order.* | | | | | | | | | |
| 6 | Demin.Water | | / | 5,0 | / | / | 10,5 | / | / | | |
| 7 | EA 3070 | | / | 0,2 | / | / | 0,4 | / | / | SWO 22017 | Elementis |
| | | *Operation 5 : Premix POS 6-10 under stirring in the listed order* | | | | | | | | | |
| 8 | Daotan VTW 1262 | | 39,0 | 39,0 | 39,0 | 39,0 | 40,8 | 40,8 | 39,0 | 1344432 | UCB |
| 9 | Demin.Water | | 12,0 | 12,0 | 12,0 | 12,0 | 12,5 | 12,5 | 12,0 | | |
| 10 | BENTONE®EW w=3,0% | | / | / | 6,7 | / | / | 13,4 | / | F21080 | Elementis |
| 10 | Laponite RD w=3,0% | | / | / | / | 6,7 | / | / | 13,4 | 00/211 | Rockwood |
| | | ***Operation*** ***6:** Mix Operation 5 in Operation 4 for 15min. under stirring* | | | | | | | | | |
| | | ***Operation*** ***7**:Premix POS.8-11 under stirring for* 5 *min.in the listed order* | | | | | | | | | |
| 8 | Demin.Water | | 15,0 | 15,0 | 15,0 | 15,0 | 10,4 | 10,4 | 10,0 | | |
| 9 | Butylglycol | | 0,7 | 0,7 | 0,7 | 0,7 | 0,7 | 0,7 | 0,7 | | |
| 10 | N-Butanol | | 1,3 | 1,3 | 1,3 | 1,3 | 1,4 | 1,4 | 1,3 | | |
| 11 | DMEA w=10% | | 2,5 | 2,5 | 2,5 | 2,5 | 1,6 | 1,6 | 1,5 | | |
| | | ***Operation 8:** Mix Operation 7 in Operation 6 for 15min. under stirring* | | | | | | | | | |
| | | ***Operation 9:** Mix Operation 3 in Operation 8 for 15min. under stirring* | | | | | | | | | |
| | | ***Operation 10:** Mix Pos. 12 under stirring for 15 min. in Opearation 9* | | | | | | | | | |
| 12 | Viscalex HV 30 w=10% | | 8,0 | 6,0 | 6,0 | 6,0 | 4,2 | 4,2 | 4,0 | 0075952S | CIBA |
| | | ***Operation 11**: Adjust pH-value with POS.13 to 7,5-8,0* | | | | | | | | | |
| 13 | DMEA w=10% | | 0,0 | 0,0 | 0,0 | 0,0 | 0,0 | 0,0 | 0,0 | | |
| | | ***Operation 12**:Mix POS.14 under stirring for 10min.* | | | | | | | | | |
| 14 | Demin.Water | | 9,4 | 6,2 | 4,7 | 4,7 | 4,9 | 2,4 | 6,0 | | |
| | | | 100,0 | 100,0 | 100,0 | 100,0 | 100,0 | 100,0 | 100,0 | | |
| | | | | | | | | | | | |

| Used demin.water for adjusting | | | | | | | | | | | |
|---|---|---|---|---|---|---|---|---|---|---|---|
| viscosity of 35+-2 sec | | DIN 4 cup: | 15,00% | 12,30% | 7,00% | 15,00% | 0,00% | 0,00% | 5,00% | | |
| | | | | | | | | | | | |

**TABLE 2 - TEST FORMULATION WITH THE ELEMENTIS ACRYLIC THICKENER (EA 3017)**

| | | | BU 30/1 | BU 30/2 | BU 30/3 | BU 30/4 | BU 30/5 | BU 30/6 | BU 30/7 | | |
|---|---|---|---|---|---|---|---|---|---|---|---|
| | | | *Weight in %* | | | | | | | | |
| *POSITION* | *Raw material* | | | | | | | | | *Lot* | *Supplier* |
| | | *Operation* 1: *Put in POS. 1* | | | | | | | | | |
| 1 | Hydrolac W 8185 | | 4.9 | 4.9 | 4.9 | 4.9 | 4.9 | 4.9 | 4.9 | 03G0001 | Eckart |
| | | | | | | | | | | | |
| | | *Operation 2:Premix POS.2-5 under stirring for 10 min. in the listed order* | | | | | | | | | |
| 2 | Butylglycol | | 3.9 | 3.9 | 3.9 | 3.9 | 3.9 | 3.9 | 3.9 | | |
| 3 | DISPERSE AYD®W30 | | 0.5 | 0.5 | 0.5 | 0.5 | 0.5 | 0.5 | 0.5 | 960402323 | Elementis |
| 4 | N-Methylpyrolidon | | 1.0 | 1.0 | 1.0 | 1.0 | 1.0 | 1.0 | 1.0 | | |
| 5 | N-Butanol | | 1.8 | 1.8 | 1.8 | 1.8 | 1.8 | 1.8 | 1.8 | | |
| | | *Operation 3:Mix Operation 2 in Operation 1 for 15 min. under stirring* | | | | | | | | | |
| | | *Operation 4: Mix POS 6+7under stirring with dissolver at 6m*/*s for 10 min. in the listed order* | | | | | | | | | |
| 6 | Demin.Water | | / | 6.25 | / | / | 12.5 | / | / | | |
| 7 | EA 3070 | | / | 0.25 | / | / | 0.5 | / | / | SWO 22017 | Elementis |
| | | *Operation 5 : Premix POS 6-10 under stirring in the listed order* | | | | | | | | | |
| 8 | Daotan VTW 1262 | | 39.0 | 39.0 | 39.0 | 39.0 | 39.0 | 39.0 | 39.0 | 1344432 | UCB |
| 9 | Demin.Water | | 12.0 | 12.0 | 12.0 | 12.0 | 12.0 | 12.0 | 12.0 | | |
| 10 | BENTONE®EW w=3,0° | | / | / | 8.3 | / | / | 16.6 | / | F21080 | Elementis |
| 10 | Laponite RD w=3,0% | | / | / | / | 8.3 | / | / | 16.6 | 00/211 | Rockwood |
| | | *Operation 6: Mix Operation 5 in Operation 4 for 15min. under stirring* | | | | | | | | | |
| | | *Operation 7:Premix POS.8-11 under stirring for 5 min.in the listed order* | | | | | | | | | |
| 8 | Demin.Water | | 15.0 | 15.0 | 15.0 | 15.0 | 10.0 | 10.0 | 10.0 | | |
| 9 | Butylglycol | | 0.7 | 0.7 | 0.7 | 0.7 | 0.7 | 0.7 | 0.7 | | |
| 10 | N-Butanol | | 1.3 | 1.3 | 1.3 | 1.3 | 1.3 | 1.3 | 1.3 | | |
| 11 | DMEA w=10% | | 2.0 | 2.0 | 2.0 | 2.0 | 1.5 | 1.5 | 1.5 | | |
| | | *Operation 8: Mix Operation 7 in Operation 6 for 15min. under stirring* | | | | | | | | | |
| | | *Operation 9*: *Mix Operation 3 in Operation 8 for 15min. under stirring* | | | | | | | | | |
| | | *Operation 10: Mix Pos. 12 under stirring for 15 min. in Opearation 9* | | | | | | | | | |
| 12 | EA 3017 w=10% | | 10.0 | 7.5 | 7.5 | 7.5 | 5.0 | 5.0 | 5.0 | 7028 | Elementis |
| | | *Operation 11: Adjust pH-value with POS.13 to* 7,5-8,0 | | | | | | | | | |
| 13 | DMEA w=10% | | 0.0 | 0.0 | 0.0 | 0.0 | 0.0 | 0.0 | 0.0 | | |
| | | *Operation 12:Mix POS.14 under stirring for 10min.* | | | | | | | | | |
| 14 | Demin.Water | | 7.9 | 3.9 | 2.1 | 2.1 | 5.4 | 1.8 | 1.8 | | |
| | | | 100.0 | 100.0 | 100.0 | 100 | 100.0 | 100.0 | 100.0 | | |
| | | | | | | | | | | | |
| Used demin.water for adjusting | | | | | | | | | | | |
| viscosity of 35+-2 sec DIN 4 cup: | | | 14.60% | 4.90% | 5.60% | 10.70% | 0.00% | 6.10% | 26.20% | | |

**TABLE 3 - EVALUATIONS METALLIC BASECOAT WITH VISCALEX HV 30**

| | | BU 29/2 (BENTONE®HD^{a)} | BU 29/3 (BENTONE®EW) | BU 29/4 (Lapanite RD) | BU 29/5 hectorite/additive) | BU 29/6 hectorite/additive) | BU 29/7 (Laponite RD) |
|---|---|---|---|---|---|---|---|
| Flow-rate at gun | 3.1.0 | 3.1.0 | 3.1.0 | 3.1.0 | 3.1.0 | 3.1.0 | 3.1.0 |
| Filmthickness | 15-17µm | 17-18µm | 17-18µm | 15-16µm | 16-18µm | 15-17µm | 12-13µm |
| Solid-content 2 h/105°C | 16,0% | 16,5% | 17,3% | 16,0 % | 18,9% | 18,0% | 15,9% |
| Metal control | 7 | 6 | 4 | 2 | 5 | 3 | 1 |
| Remarks After 4 days | -- | -- | -- | -- | +3% demin.water | +1% demin.water | +3% demin.water ;gel-like |
| Ratio AC-thickener: Clay | 100:0. | 75:25 | 75:25 | 75:25 | 50:50 | 50:50 | 50:50 |
| Flow-rate at gun | 2.3.2 | 2.2.2 | 2.2.2 | 2.3.0 | 2.2.,0 | 2.2.1 | 3.1.0 |
| **Film Thickness** | **13-14µm** | **13.14µm** | **13-15µm** | **13-15µm** | **14-15µm** | **13-14µm** | **14-15µm** |

| | | | | | | | |
|---|---|---|---|---|---|---|---|
| **1= best metal control** **7=worst metal control** a) Bentone^{®} HD is synonymous to EA-3070 which is a mixture of natural hectorite and phosphonate | | | | | | | |

### EVALUATION METAL CONTROL AT COMPARABLE FILMTHICKNESSES

**Table 4**

| | |
|---|---|
| BU 29/1 (Viscalex HV 30 Standard) | 1 |
| BU 29/2 (Natural Hectorite/Additive 3:1) | 1-2 |
| BU 29/3 (BENTONE®EW 3:1) | 1-2 |
| BU 29/4 (Laponite RD 3:1) | 1-2 |
| BU 29/5 (Natural Hectorite/Additive 1:1) | 1-2 |
| BU 29/6 (BENTONE®EW 1:1) | 1-2 |
| BU 29/7 (Laponite RD 1:1) | 1-2 |

**Table 5**

| | |
|---|---|
| BU 29/2 (Natural Hectorite/Additive 3:1) | 1-2 |
| BU 29/3 (BENTONE®EW 3:1) | 1-2 |
| BU 29/4 (Laponite RD 3:1) | 1 |

**Table 6**

| | |
|---|---|
| BU 29/5 (Natural Hectorite/Additive 1:1) | 1-2 |
| BU 29/6 (BENTONE®EW 1:1) | 1-2 |
| BU 29/7 (Laponite RD 1:1) | 1 |

0=excellent
1=standard
2=sufficient
3=poor

**TABLE 7 - EVALUATIONS OF METALLIC BASECOAT WITH EA 3017**

| | BU30/1 | BU 30/2 Natural Hectorite additive. | BU 30/3 (BENTONE®EW) | BU 30/4 (Laponite RD) | BU 30/5 Natural Hectorite / additive | BU 30/6 | BU 30/7 (Laponlte RD) |
|---|---|---|---|---|---|---|---|
| Flow-rate at gun | 3.1.0 | 3.1.0 | 3.1.0 | 3.1.0 | 3.1.0 | 3.1.0 | 3.1.0 |
| Filmthickness | 16-19µm | 18-20µm | 16-18µm | 13-15µm | 18-20µm | 15.17µm | 13-15µm |
| Solid-content 2h/105°C | 16,0% | 17,6% | 17,4% | 16,4% | 19,1% | 17,3% | 14,4% |
| Metal control within the series | 7 | 6 | 4 | 2 | 5 | 3 | 1 |
| Cross hatch test | 0 | 0 | 0 | 0 | 0 | 0 | 0 |
| Remarks After 4 days | - - | - - | - - | Slightly gel-like | - - | +1% demin.water | Strong gel-like |
| Ratio AC-thickener: Clay | 100:0 | 75:25 | 75:25 | 75:25 | 50:50 | 50:50 | effect; foamy 50:50 |
| Flow-rate at gun | 2.2.0 | 2.2.0 | 2.3.0 | 2.3.0 | 2.2.2 | 3.0.0 | 3.1.0 |
| Filmthickness | 12-13µm | 12-13µm | 13-14µm | 12-14µm | 12-13µm | 13-14µm | 13-14µm |

| | | | | | | | |
|---|---|---|---|---|---|---|---|
| 1= best metal control **7=worst metal control** | | | | | | | |

### EVALUATION METAL CONTROL AT COMPARABLE FILMTHICKNESSES

**Table 8**

| | |
|---|---|
| BU 30/1 (EA3017) | 1 |
| BU 30/2 (Natural HectoritelAdditive 3:1) | 0 |
| BU 30/3 (BENTONE®EW 3:1) | 1-2 |
| BU 30/4 (Laponite RD) | 1-2 |
| BU 30/5 (Natural Hectorite/Additive 1:1) | 0 |
| BU 30/6 (BENTONE®EW 1:1) | 0 |
| BU 30/7 (Laponite RD) | 1-2 |

**Table 9**

| | |
|---|---|
| BU 30/2 (Natural Hectorite/Additive 3:1) | 0 |
| BU 30/3 (BENTONE®EW 3:1) | 1 |
| BU 30/4 (Laponite RD) | 1-2 |

**Table 10**

| | |
|---|---|
| BU 30/5 (Natural Hectorite/Additive 1:1) | 0 |
| BU 30/6 (BENTONE®EW 1:1) | 1 |
| BU 30/7 (Laponite RD) | 2 |

0=excellent
1=standard
2=sufficient
3=poor

### Example 3

This example shows the improvement in metal control provided by this invention.

### System:

Waterborne metallic basecoat based on Daotan VTW 1262 (Polyurethane dispersion solvent free - table II)

### Summary:

### Standard evaluations

All formulations (tables 11-13) were spray applied with the spraymation Erichsen type 480. The gun was a Sata type P 90. Steer-air-pressure was 4.0 bar, spray-air-pressure was 4.5 bar. We applied the basecoats on aluminum panels in two spray-coats. After the first coat the panels were flashed with an ambient temperature air shower at approx. 1 bar until matt; between 180 sec and 220 sec. The flash process was repeated after the second spray pass.

As a first step we applied all basecoats at equal film thicknesses (11-14µm). The fluid flow rate at the gun was adjusted to provide the desired film build with the coatings adjusted to approx. 30 sec with a DIN4 flowcup. All panels were clear-coated with Permacron 2K-MS Brillant from Spiess Hecker at approx. 50µm and cured at 80°C for 20min.

From table 14 it was clear to see, that the metal control achieved with EA 3070, (a beneficiated Hectorite slurry mixed with phosphonate prior to spray drying into a hectorite composition) was indeed outstanding in comparison to Viscalex and Laponite RD and in comparison to the natural hectorite BENTONE® EW. The invention composition demonstrated advantages in terms of metal control, solids level and stability.

In a second step we fixed the flow-rale at the gun (3.0.0) to evaluate the metal control performance at different film thicknesses. This is because experience indicates that metal control is improved at lower thicknesses.

From Table 15 the basecoats thickened with the hectorite composition demonstrated significantly improved metal control at almost twice the target film build. This excellent behavior at high film thicknesses was previously unknown with thickened with acrylic alone basecoats. Because or the gel-like behaviour of the synthetic hectorite thickened basecoats, it was not possible to achieve higher film thicknesses even by adjusting flow rates at the gun (table 16). Combining of tables 15 and 16 together demonstrates excellent metal control over a very broad range of 12 to 24 µm.

### Rheological studies:

The application behavior of the clay thickened basecoats was evaluated by preparing oscillation-rotation-oscillation rheograms. From these it is possible to see the true thixotropic behaviour and also to examine the sagging/levelling behavior. First, an amplitude sweep was performed to establish the deformation, which was 1.0% for all systems (Graph 1).

The experiment was then run by pre-oscillation at this constant deformation (CSD), constant shear stress (CSS) at 1000 1/s, and finally repeated oscillation. The CSS should simulate an application for instance by spraying and the following CSD the behavior of the system on the panel afterwards.

In Graph 2, the results for Viscalex HV 30 show little thixotropy (G' and G" rapidly recover after CSS). The data imply good sagging because G'(elastic modulus) is also greater than G" (viscous modulus) on recovery.

Both Laponite RD trials showed very thixotropic character (G' and G" stay at a lower level than their original after CSS). They also showed a viscous character (G"> G' after CSS for approx 50 sec. 200 sec.). This is a sign of poor sagging. (Graph 3).

In Graph 2, the EA 3070 thickened basecoats (BU 33/4 and 5) show similar or better rheological behaviour to Viscalex HV 30. Bu 33/4 shows no thixotropy and even a stronger elastic character (G'>>G") after CSS than Viscalex HV 30, which is a sign of improved sagging. Though Bu 33/5 shows slight thixotropy, it also behaves elastically after the CSS.

To investigate storage stability, a frequency sweep was also performed (graph 4 and 5) to compliment the visual examination (Table 16). The deformation here was again 1.0%. Graph 4 shows that all samples have an elastic character (G'>G"), which indicates good anti-setting. However the Laponite RD samples show G' massively greater than G" in comparison to the Viscalex HV 30 sample. This extreme behaviour suggests the system is going to be too elastic, which can cause a very strong gel-like behaviour and also syneresis. This was confirmed in the visual evaluation after 1 week at 40°C (Table 16). Graph 4 shows quite clearly that the EA 3070 samples also had an elastic character, but at a lower level and closer to the Viscalex HV 30. This also corresponds to the visual examination shown in Table 16. At low frequency, which simulates storage stability at rest, the difference between G' and G" of the EA 3070 samples was greater than for the Viscalex. This is a sign a better storage stability. The increase of G' for the Viscalex HV 30 graph is typical for acrylic thickeners and is caused by the failure of the polymer to relax at high frequency.

**Table 11 - CLAYS vs VISCALEX HV 30 in METALIC BASECOATS**

| | | | BU 33/1 | BU 33/2 | BU 33/3 | BU 33/4 | BU 33/5 | BU 33/6 | BU 33/7 | | | |
|---|---|---|---|---|---|---|---|---|---|---|---|---|
| | | | *Weight in %* | | | | | | | | | |
| *POSITION* | *Raw material* | | | | | | | | | *Lot* | *Supplier* | |
| | | *Operation 1: Put in POS.1* | | | | | | | | | | |
| 1 | Hydrolac W 8185 | | 4.9 | 4.9 | 4.9 | 4.9 | 4.9 | 4.9 | 4.9 | 03G0001 | Eckart | |
| | | | | | | | | | | | | |
| | | *Operation 2:Premix POS.2-5 under stirring* for 10 *min. in the listed order* | | | | | | | | | | |
| 2 | Butylglycol | | 3.9 | 3.9 | 3.9 | 3.9 | 3.9 | 3.9 | 3.9 | | | |
| 3 | DISPERSE AYD®W30 | | 0.5 | 0.5 | 0.5 | 0.5 | 0.5 | 0.5 | 0.5 | 960402323 | Elementis | |
| 4 | N-Methylpyrolidon | | 1.0 | 1.0 | 1.0 | 1.0 | 1.0 | 1.0 | 1.0 | | | |
| 5 | N-Butanol | | 1.8 | 1.8 | 1.8 | 1.8 | 1.8 | 1.8 | 1.8 | | | |
| | | ***Operation 3**:Mix Operation 2 in Operation 1 for 15 min. under stirring* | | | | | | | | | | |
| | | **Operation** ***4**:Mix POS.6+7under stirring with dissolver at 6m*/*s for 10 min. in the listed order.* | | | | | | | | | | |
| 6 | Demin.Water | | / | / | / | 9.0 | 13.5 | / | / | | | |
| 7 | EA 3070 | | / | / | / | 1.0 | 1.5 | / | / | SWO 22017 | Elementis | |
| | | ***Operation 5**:Premix POS. 8-10 under stirring in the listed order* | | | | | | | | | | |
| 8 | Daotan VTW 1262 | | 39.0 | 39.0 | 39.0 | 39.0 | 39.0 | 39.0 | 39.0 | 1344432 | UCB | |
| 9 | Demin.Water | | 12.0 | 9.6 | / | 12.0 | 12.0 | 9.6 | / | | | |
| | | | | | | | | | | | | |
| | | | | | | | | | | | | |
| | | ***Operation 6**: Mix Operation 5 in Operation 4 for 15min. under stirring* | | | | | | | | | | |
| | | ***Operation* 7***: Premix POS*.*8-11 under stirring for* 5 *min.in the listed order* | | | | | | | | | | |
| 10 | BENTONE®EW w=3,0% | | / | / | / | / | / | 33.4 | 50.0 | F02400 | Elementis | |
| 10 | Laponite RD w=3,0% | | / | 33.4 | 50.0 | / | / | / | / | 00/211 | Rockwood | |
| 11 | Demin.Water | | 20.0 | / | / | 10.0 | 10.0 | / | / | | | |
| 12 | Butylglycol | | 0.7 | 0.7 | 0.7 | 0.7 | 0.7 | 0.7 | 0.7 | | | |
| 13 | N-Butanol | | 1.3 | 1.3 | 1.3 | 1.3 | 1.3 | 1.3 | 1.3 | | | |
| 14 | DMEA w=10% | | 2.5 | / | / | / | / | / | / | | | |
| | | **Operation 8:** *Mix Operation 7 in Operation 6 for 15min. under stirring* | | | | | | | | | | |
| | | **Operation 9:** *Mix Operation 3 in Operation 8 for 15min. under stirring* | | | | | | | | | | |
| | | **Operation** ***10:** Mix Pos. 12 under stirring for 15 min. in Opearation 9* | | | | | | | | | | |
| 15 | Viscalex HV 30 w=10% | | 8.0 | 1.0 | 1.0 | 1.0 | 1.0 | 1.0 | 1.0 | 0075952S | CIBA | |
| | | ***Operation 11**: Adjust pH-value with POS.13 to 7,5-8,0* | | | | | | | | | | |
| 16 | DMEA w=10% | | 1.0 | 0.4 | 0.4 | 0.6 | 0.6 | 0.4 | 0.4 | | | |
| | | *Operation 12:Mix POS.14 under stirring for 10min.* | | | | | | | | | | |
| 17 | Demin.Water | | 3.4 | 2.5 | 0.0 | 13.3 | 8.3 | 2.5 | 0.0 | | | |
| | | | 100.0 | 100.0 | 104.5 | 100.0 | 100.0 | 100.0 | 100.0 | | | |
| | | | | | | | | | | | | |
| | | | | | | | | | | | | table 1 |

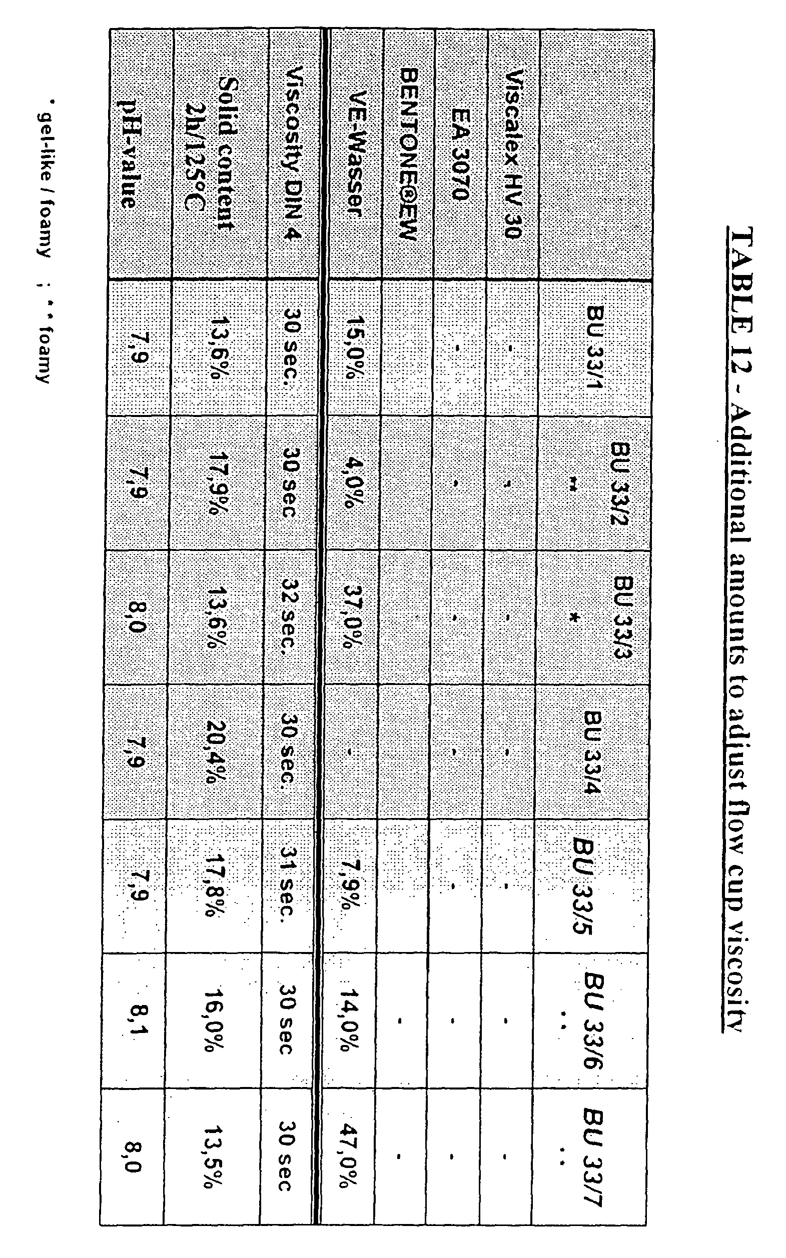

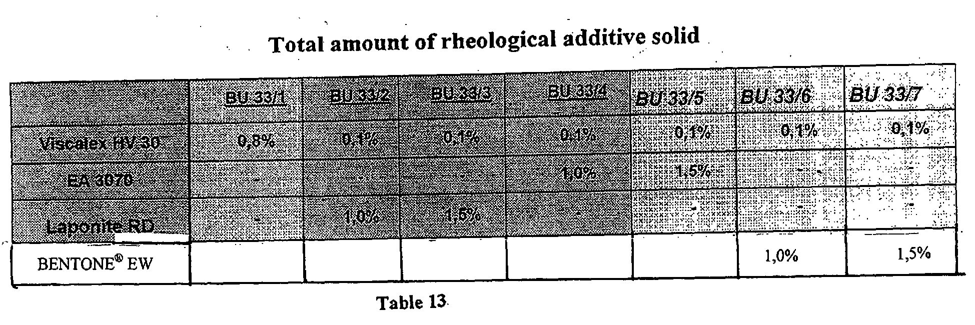

### EVALUATIONS OF CLAY THICKENED METALLIC BASECOATS

**Table 14**

| | BU 33/1 | BU 33/2 (Laponite RD) | BU 33/3 (Laponite RD) | BU 33/4 (EA 3070) | BU 33/5 (EA 3070) | BU 33/6 (BENTONE®E W) | BU 33/7 (BENTONE®E W) |
|---|---|---|---|---|---|---|---|
| Flow-rate at gun | 3.0.0 | 2.3.0 | 4.2.0 | 2.1.0 | 2.2.0 | 3.0.0 | 3.3.0 |
| Film Thickness | 12-14µm | 12-14µm | 11-13µm | 12.13µm | 12.14µm | 12-14µm | 12-13µm |
| Metal control | 5 | 3 | 2 | 0 | 0-1 | 1 | 1 |
| Remarks After 4 days | -- | Foamy | Foamy;Gel l-ike | -- | -- | Foamy | Foamy |
| Ratio Clay: AC-thickener | 0:0.8 | 10:1 | 15:1 | 10:1 | 15:1 | 10.1 | 15:1 |

0=excellent, 5=poor

### EVALUATIONS OF CLAY THICKENED METALLIC BASECOATS

**Table 15**

| | BU 33/1 | BU 33/4 (EA 3070) | BU 33/5 (EA 3070) |
|---|---|---|---|
| Flow-rate at gun | 3.0.0 | 3.0.0 | 3.0.0 |
| Film Thickness | 12-14µm | 21-23µm | 18-19µm |
| Metal control | 5 | 0-1 | 1-2 |

0=excellent
5=poor

**Table 16 - Storage stability 1 week at 40 °C**

| | BU 33/1 | BU 33/2 (Laponite RD) | BU 33/3 (Laponite RD) | BU 33/4 (EA 3070) | BU 33/5 (EA 3070) |
|---|---|---|---|---|---|
| Remarks | o.k | gel particles | Gel-like with gel particles and strong syneresis | o.k | Slightly gel-like After homogenisation o.k |

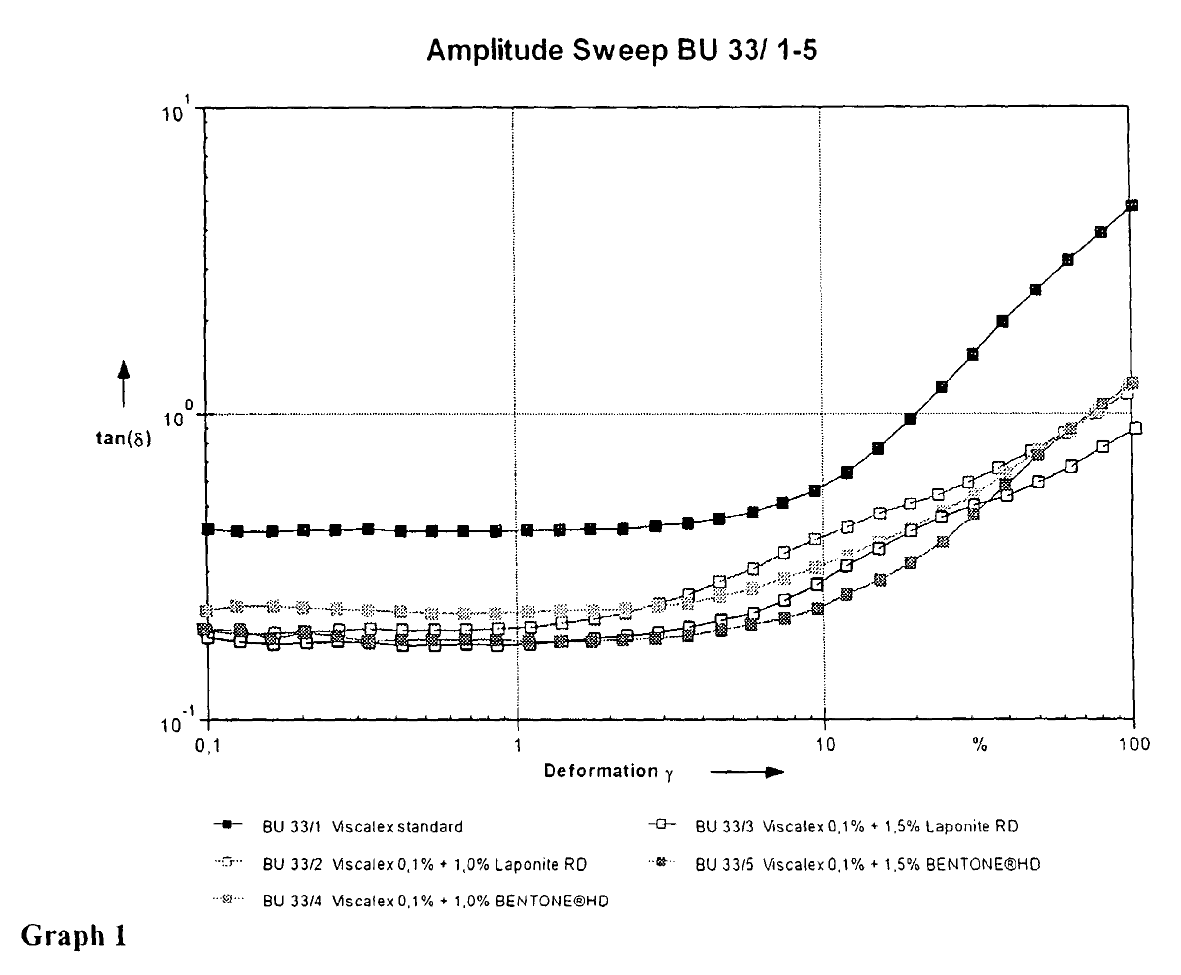

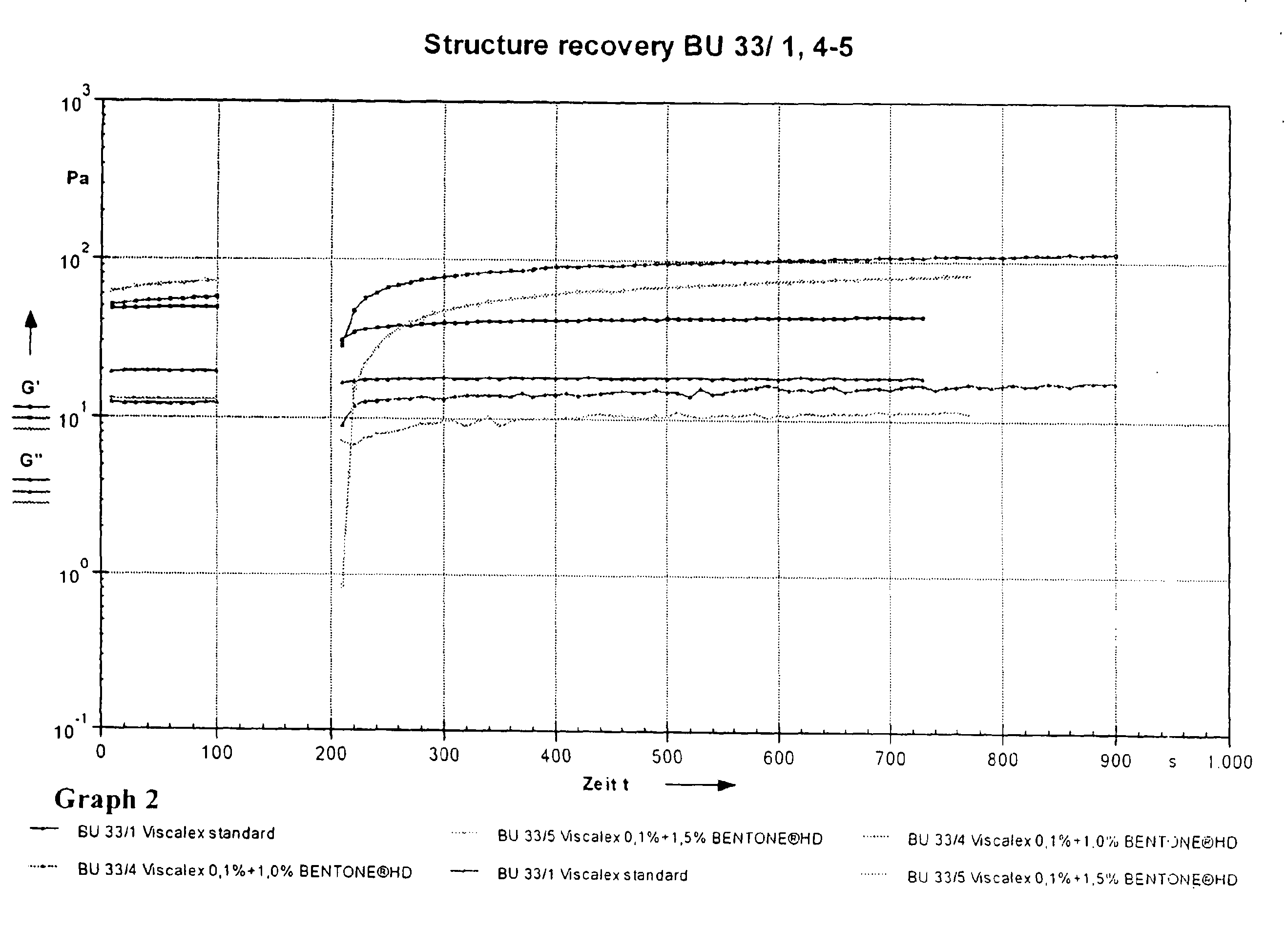

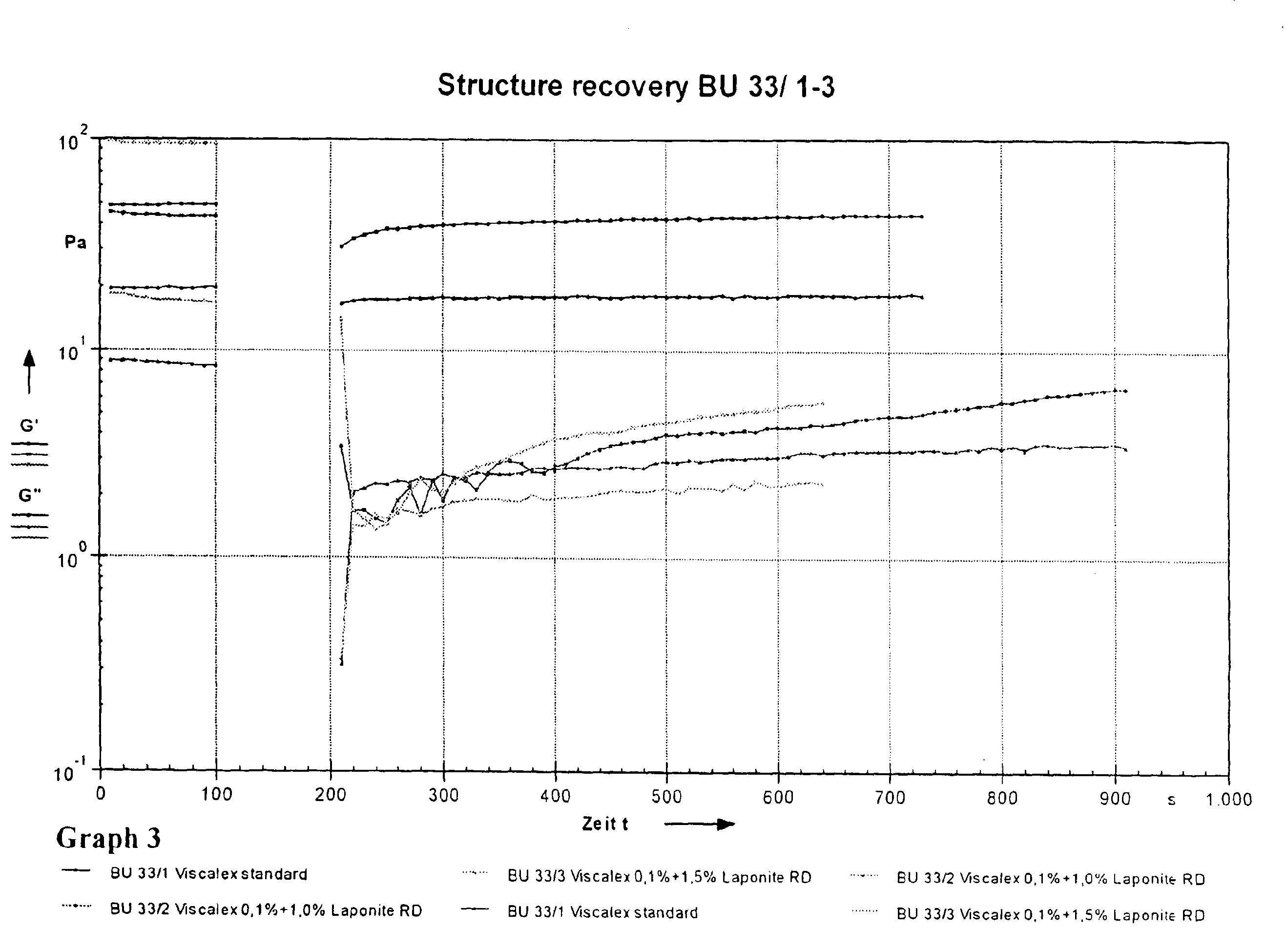

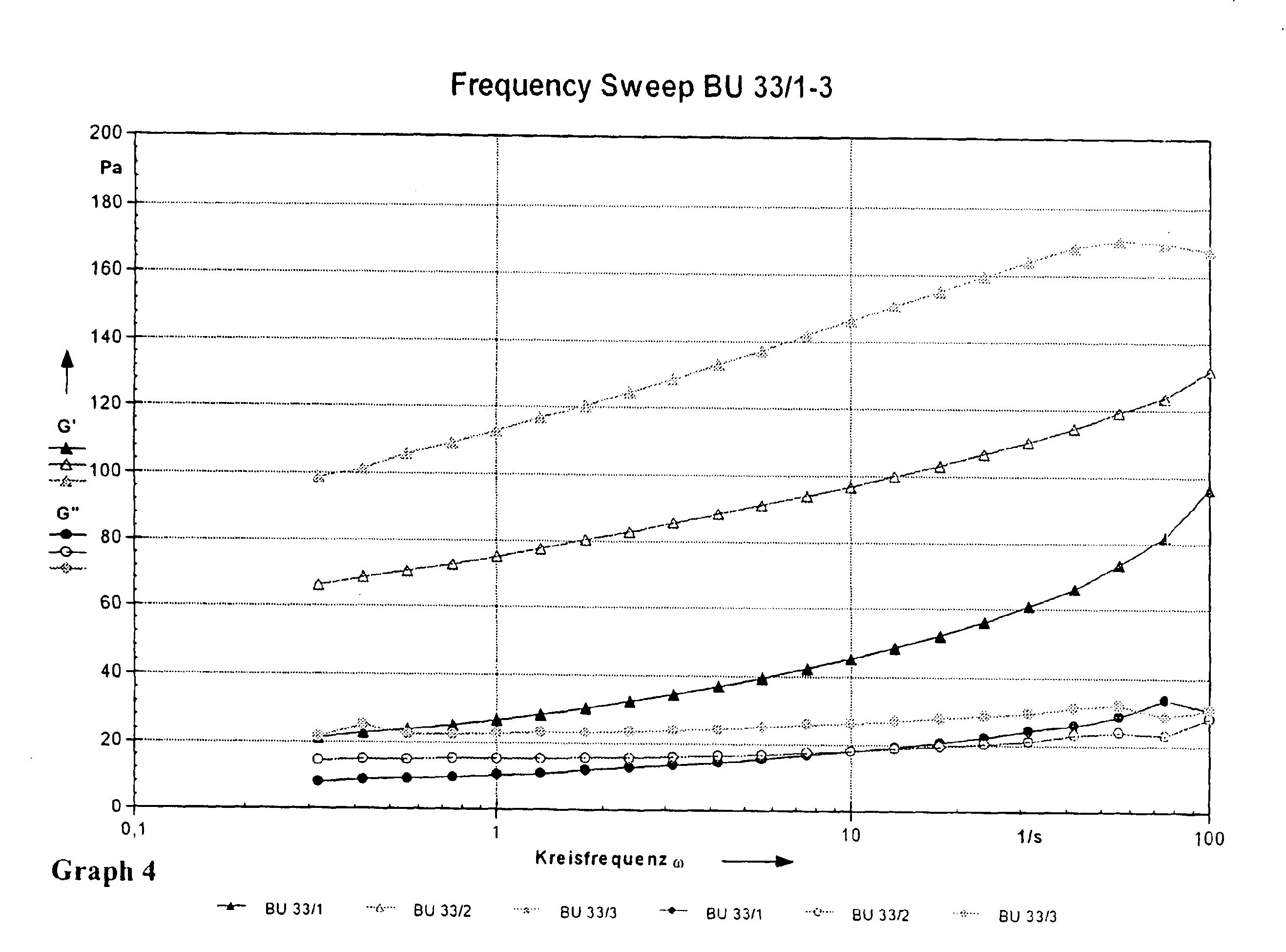

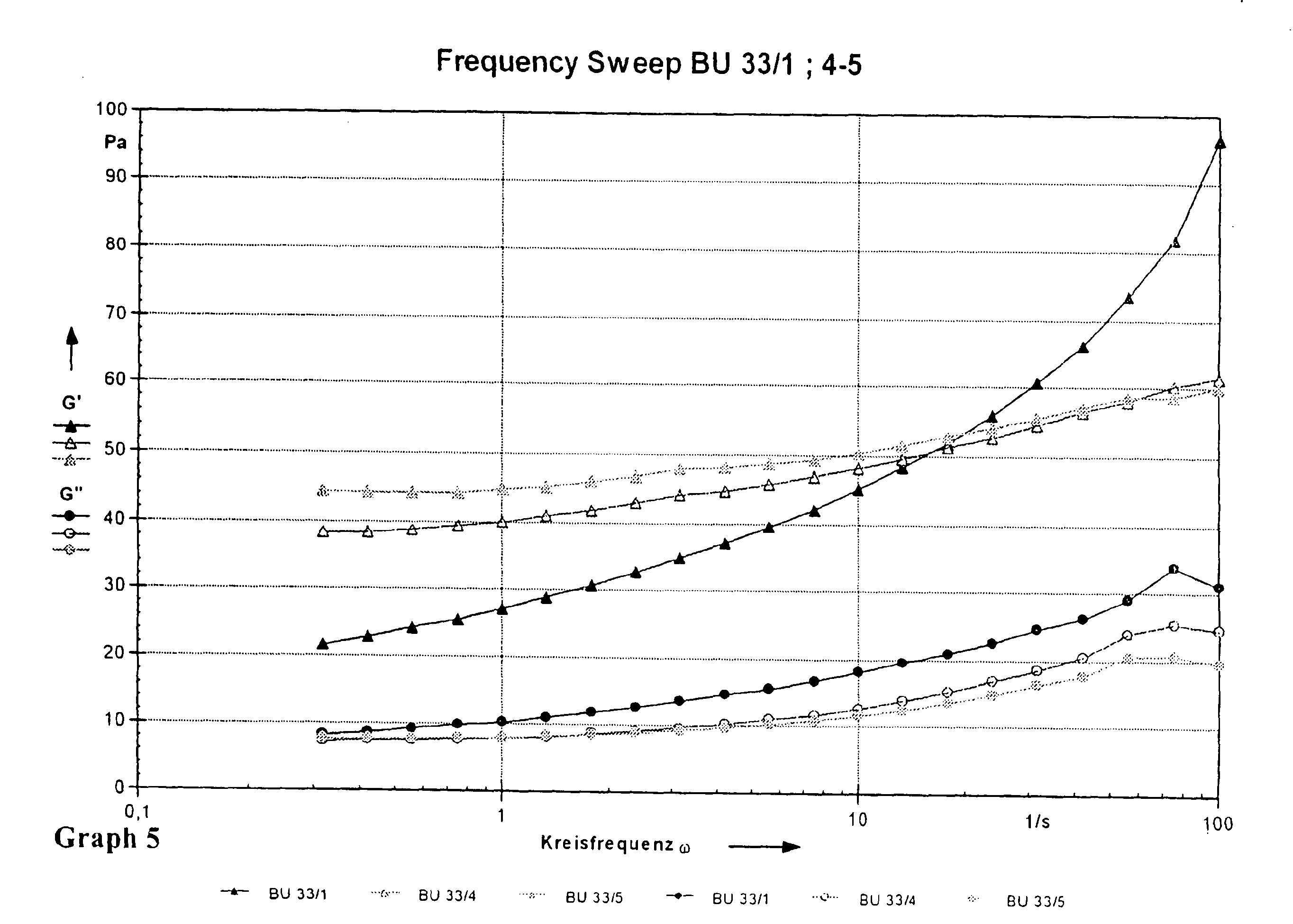

### Discussion:

All clay thickened basecoats demonstrate improved metal control over the standard basecoat thickened with the acrylic thickener Viscalex HV 30. The basecoat containing the hectorite/phosponate composition demonstrated outstanding performance in terms of metal control at a wide range of film builds, increased solid content and improvements in overall stability.

Though synthetic hectorite (Laponite RD) paints showed better metal control performance than Viscalex HV 30, it was by far not at the level of inventive paint compositions using the hectorite/phosponate composition. Moreover synthetic hectorite developed a gel-like appearance after days of storage, which is a sign of instability and poor ease of application. This was especially prevalent at the higher concentrations. Further, formulations based on synthetic hectorite showed tendency to gas. This was not observed with those using hectorite/phosponate compositions.

The basecoats with the hectorite/phosphonate composition in this test required small amounts of an acrylic thickener to achieve the flow cup viscosity. Rheological measurements were able to predict and confirm the experimental results in terms of application characteristics and storage stability.

### Conclusions:

The above example and the charts shown lead to the firm conclusion that with use of natural hectorite clay with phosphonate it is possible to formulate basecoats with excellent rheological behaviour and metal control outperforming basecoats formulated with acrylic thickeners and also synthetic hectorites.

The application window is shown in terms of metal control at higher film thicknesses is much larger than with the acrylic thickened basecoats. The higher solid content achievable using basecoats formulated with natural hectorite and phosphonate means the customer can reduce manufacturing and transport costs. Further, the higher application volume solids allow for reduced flow rates, improved atomization and the ability to run the manufacturing line with a wider range of temperature and humidity conditions. In some situations, the higher application volume solids will allow for higher line speeds because the same amount of solid material can be applied at a shorter time As the natural hectorite clay with phosphonate in a pregel still has a liquid character at 8-10% solids, it could be post added without the fear of bad homogenization or seeding. The rheological measurements help to predict and confirm the experimental results in terms of application characteristics and storage stability. Gasing was not observed in formulations using the hectorite/phosponate compositions.

### Example 4

**This example compares straight shade (that is not metallic) paint formulations containing natural hectorite/phosphonate compositions with prior art acrylic and synthetic hectorite thickener paint formulations. A common sagging panel test was used.**

### Preparation of the sagging panels

1. The sagging panels were 60cm x 30cm with holes punched from top to bottom. A wedge of paint coating from 3µm to 40µm was applied. This was done by spraying 14 passes up and 14 passes down then 9 passes up and 9 passes down then 5 passes up and 5 passes down. The flow rate was adjusted at 2.1.0. Atomisation air and fan air were adjusted at approx. 5bar.

The sagging border was evaluated by measuring the film thickness around the hole where the basecoat run was longer than 1cm. To standardize the comparison we added into all basecoats the same amount of rheological additive. The Brookfield viscosity was then adjusted to 730±20 cP with a 5 spindle at 50 rpm.

Replacing 50% of a commonly used acrylic thickener (Viscalex HV30) with a formulation according to the invention, the sag tolerance was improved from 28µm up to 36µm. By post adding a pregel (KM47) of the invention, the sagging resistance was improved in comparison to the standard from 28µm up to 32µm.

The same trial was carried out with Laponite RDS (KM46), a commonly used synthetic hectorite. The sagging resistance dropped to 15µm; distinctly worse in comparison to the Viscalex HV30. In a similar post-correction with Laponite RDS (KM48), the sagging resistance was almost comparable with the standard. There was no improvement to see.

See the following Tables 17, 18 and 19 showing results.

**Table 17 - Test Formulations**

| Position | Raw Material | KM 44 | KM 45 | KM 46 | KM 47 | KM 48 |
|---|---|---|---|---|---|---|
| Operation 1: Lay in POS.1 | | | | | | |
| 1 | Daotan VTW 1262 | 39,0 | 39,0 | 39,0 | 39.0 | 39,0 |
| **Operation 2: Put in in the listed order. Stir for 30 min. at 4 m/s** | | | | | | |
| 2 | NV 7394 | 10.0 | 10.0 | 10.0 | 10.0 | 10.0 |
| 2 | Natural Hectorite/additive | / | 5.0 | / | / | / |
| 2 | Laponite RDS w=10% | / | / | 5.0 | / | / |
| Operation 3: Put in Pos. 3 | | | | | | |
| 3 | Demin. Water | 12,0 | 12,0 | 12,0 | 12,0 | 12,0 |
| **Operation 4: Put in in the listed order. Stir for 10 minutes** | | | | | | |
| 4 | n-Propanol | 2,1 | 2,1 | 2,1 | 2,1 | 2,1 |
| 5 | n-Butanol | 1,3 | 1,3 | 1,3 | 1,3 | 1,3 |
| 6 | Butylglycol | 0,7 | 0,7 | 0,7 | 0,7 | 0,7 |
| **Operation 6: Put in in the listed order. Stir for 15 minutes** | | | | | | |
| 7 | Demin. Water | 15,0 | 15,0 | 15,0 | 15,0 | 15,0 |
| 8 | Viscalex HV 30 w=10% | 8,0 | 5,0 | 5,0 | 8,0 | 8,0 |
| 9 | Demin. Water | 9,4 | 9,4 | 9,4 | 9,4 | 9,4 |
| Operation 7: Adjust ph-value with POS.10 to 7,9-8,1 | | | | | | |
| 10 | DMEAw=10% | 2,5 | 1,9 | 1,9 | 2,5 | 2,5 |
| **Operation 8: Post add BENTONE®HD or Laponite RDS respectively** | | | | | | |
| 11 | Natural Hectorite/additive | / | / | / | 2,0 | / |
| 11 | Laponite RDS 2=10% | / | / | / | / | 2,0 |
| 11 | Viscalex HV 30 w=10% | 2,0 | / | / | / | / |
| | | 102.0 | 101.4 | 101.4 | 102.0 | 102.0 |
| **Used De-ionized Water for adjusting** | | | | | | |
| Brookfield viscosity of 730±20 cp | | 25,00% | 0,0% | 12,5% | 22,5% | 30,0% |
| Spindle 5, 50rpm | | | | | | |

**Table 18 - Total Amount of Rheological Additive Active**

| | **KM 44** | **KM 45** | **KM 46** | **KM 47** | **KM 48** |
|---|---|---|---|---|---|
| Viscalex HV 30 | 1.00% | 0.50% | 0.50% | 0.80% | 0.80% |
| Natural Hectorite/additive | - | 0.50% | - | 0.20% | - |
| Laponite RDS | - | - | 0.50% | - | 0.20% |

**Table 19 - Results Sagging Panels**

| | **KM 44** | **KM 45** | **KM 46** | **KM 47** | **KM 48** |
|---|---|---|---|---|---|
| Hiding at | 6µm | 6µm | 6µm | 6µm | 6µm |
| Runners at | 28µm | 36µm | 15µm | 32µm | 27µm |
| Gun Adjusted at | 2.1.0 | 2.1.0 | 2.1.0 | 2.1.0 | 2.1.0 |

### DISCUSSION OF RESULTS

Comparing KM 44, 45 and 46 it is possible with use of this invention to maintain the amount of rheological additive and provide significant improvements in sagging resistance. This is without the disadvantage of lower solid contents due to viscosity adjustments (see Table 17).

## Claims

1. An automotive metallic paint formulation comprising:
a) at least 0.1 % of a natural hectorite clay; and
b) from 0.5 to 15 wt.% based on the weight of clay of one or more phosphonate additives;
c) metallic effect flakes selected from the group consisting of aluminum, copper, mica, or interference pigments and mixtures thereof; and
d) water.

2. The metallic paint formulation according to claim 1, wherein said formulation is a spray metallic paint formulation.

3. The formulation according to Claim 1, wherein the natural hectorite is selected from the group consisting of calcium hectorite and sodium hectorite.

4. The formulation according to Claim 1, wherein the natural hectorite is sodium hectorite.

5. The paint formulation according to Claim 1, wherein the phosphonate additive is selected from the group consisting of:
(a) Phosphonic acid compounds that contain at least two moieties having the structure: 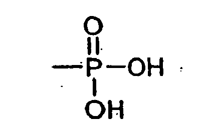 and salts thereof,
(b) Phosphinic acid compounds that contain at least two moieties having the structure: 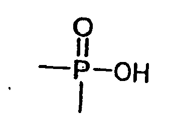 and salts thereof,
(c) Compounds which may form phosphonic or phosphinic acids, or salts thereof, under the conditions of use in making these paint formulations, and
(d) The lithium, sodium, potassium, calcium or magnesium salts of the compounds described under (a) and (b).

6. The paint formulation according to Claim 1, further comprising an alkali swellable-rheological additive.

7. The formulation according to Claim 1 wherein the natural hectorite is sodium hectorite and the phosphonate compound is selected from the group consisting of:
a) Diphosphonic acids of formula R¹R²C(PO(OH)₂)₂ and salts thereof,
b) Diphosphonic acids of formula R¹-CR²(PO(OH)₂)-R³-CR²PO(OH)₂-R⁵ and salts thereof,
c) Phosphonic acids with general formula R¹R⁴C=C(PO(OH)₂)₂ and salts thereof, and
d) the lithium, sodium, potassium, calcium and magnesium salts of the compounds described under a), b) and c),
where R¹ is selected from the group consisting of H, a linear or branched alkyl, alkene, hydroxyalkyl, aminoalkyl hydroxyalkene, aminoalkene with 1 to 22 carbon atoms or an aryl, hydroxyaryl, aminoaryl with 6 to 22 carbon atoms; R² is selected from the group consisting of R¹ and OH; R³ is an alkyl with 0 to 22 carbon atoms; and both R⁴ and R⁵ is selected from the group R¹.

8. The formulation according to Claim 1, wherein the phosphonate additive is selected from the group consisting of 1-hydroxyethylene-1,1-diphosphonic acid sodium salt or an ester thereof.

9. The formulation according to Claim 8, wherein the natural hectorite is sodium hectorite.

10. A paint formulation according to claim 1 comprising:
a) 0.1 to 10 wt.% natural hectorite clay; and
b) 0.5. to 6 wt.% based on the weight of the natural hectorite clay of one or more phosphonate additives.

11. A method of making a paint formulation according to one of the preceding claims, comprising:
a) treating a mixture of natural hectorite and water with one or more phosphonate additives; and
b) adding such treated mixture to the paint formulation.

12. The method of making a paint formulation according to claim 11, comprising:
a) treating a mixture of natural hectorite and water with one or more phosphonate additives to form a clay slurry; and
b) drying the treated mixture; and
c) adding such treated mixture to the paint formulation.

13. The method according to Claim 12, wherein the natural hectorite is sodium hectorite.

## Patentansprüche

1. Metallische Fahrzeuglackformulierung, umfassend:
a) mindestens 0,1 % eines natürlichen Hektorit-Tons und
b) 0,5 bis 15 Gew.-%, basierend auf dem Gewicht des Tons, eines oder mehrerer Phosphonat-Zusätze,
c) metallische Effektflocken, ausgewählt aus der Gruppe bestehend aus Aluminium, Kupfer, Mica oder Interferenzpigmenten und Gemischen derselben, und
d) Wasser.

2. Metallische Lackformulierung nach Anspruch 1, **dadurch gekennzeichnet, dass** die Formulierung eine metallische Spritzlackformulierung ist.

3. Formulierung nach Anspruch 1, **dadurch gekennzeichnet, dass** der natürliche Hektorit ausgewählt ist aus der Gruppe bestehend aus Calciumhektorit und Natriumhektorit.

4. Formulierung nach Anspruch 1, **dadurch gekennzeichnet, dass** der natürliche Hektorit Natriumhektorit ist.

5. Lackformulierung nach Anspruch 1, **dadurch gekennzeichnet, dass** der Phosphonat-Zusatz ausgewählt ist aus der Gruppe bestehend aus:
(a) Phosphonsäure-Verbindungen, die mindestens zwei Komponenten mit der Struktur 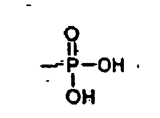 enthalten, und Salzen derselben,
(b) Phosphinsäure-Verbindungen, die mindestens zwei Komponenten mit der Struktur 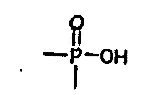 enthalten, und Salzen derselben,
(c) Verbindungen, die unter den Verwendungsbedingungen bei der Herstellung dieser Lackformulierungen Phosphon- oder Phosphinsäuren oder Salze derselben bilden können, und
(d) den Lithium-, Natrium-, Kalium-, Calcium- oder Magnesiumsalzen der unter (a) und (b) beschriebenen Verbindungen.

6. Lackformulierung nach Anspruch 1, die ferner einen alkaliquellbaren rheologischen Zusatz umfasst.

7. Formulierung nach Anspruch 1, **dadurch gekennzeichnet, dass** der natürliche Hektorit Natriumhektorit ist und die Phosphanat-Verbindung ausgewählt ist aus der Gruppe bestehend aus:
a) Diphosphonsäuren gemäß der Formel R¹R²C(PO(OH)₂)₂ und Salzen derselben
b) Diphosphonsäuren gemäß der Formel R¹-CR²(PO(OH)₂)-R³-CR²PO(OH)₂-R⁵ und Salzen derselben
c) Phosphonsäuren mit der allgemeinen Formel R¹R⁴C=C(PO(OH)₂)₂ und Salzen derselben und
d) den Lithium-, Natrium-, Kalium-, Calcium- und Magnesiumsalzen der unter a), b) und c) beschriebenen Verbindungen,
wobei R¹ ausgewählt ist aus der Gruppe bestehend aus H, einem linearen oder verzweigten Alkyl, Alken, Hydroxyalkyl, Aminoalkylhydroxyalkylen, Aminoalken mit 1 bis 22 Kohlenstoffatomen oder einem Aryl, Hydroxyaryl, Aminoaryl mit 6 bis 22 Kohlenstoffatomen; R² ausgewählt ist aus der Gruppe bestehend aus R¹ und OH, R³ ein Alkyl mit 0 bis 22 Kohlenstoffatomen ist und sowohl R⁴ als auch R⁵ ausgewählt ist aus der Gruppe R¹.

8. Formulierung nach Anspruch 1, **dadurch gekennzeichnet, dass** der Phosphonat-Zusatz ausgewählt ist aus der Gruppe bestehend aus 1-Hydroxyethylen-1,1-diphosphonsäure-Natriumsalz oder einem Ester desselben.

9. Formulierung nach Anspruch 8, **dadurch gekennzeichnet, dass** der natürliche Hektorit Natriumhektorit ist.

10. Lackformulierung nach Anspruch 1, umfassend:
a) 0,1 bis 10 Gew.-% natürlichen Hektorit-Ton und
b) 0,5 bis 6 Gew.-%, basierend auf dem Gewicht des natürlichen Hektorit-Tons, eines oder mehrerer Phosphonat-Zusätze.

11. Verfahren zur Herstellung einer Lackformulierung nach einem der vorangehenden Ansprüche, umfassend:
a) Behandeln eines Gemisches aus natürlichem Hektorit und Wasser mit einem oder mehreren Phosphonat-Zusätzen und
b) Zugeben dieses behandelten Gemisches zu der Lackformulierung.

12. Verfahren zur Herstellung einer Lackformulierung nach Anspruch 11, umfassend:
a) Behandeln eines Gemisches aus natürlichem Hektorit und Wasser mit einem oder mehreren Phosphonat-Zusätzen, um eine Ton-Aufschlämmung auszubilden, und
b) Trocknen des behandelten Gemisches und
c) Zugeben dieses behandelten Gemisches zu der Lackformulierung.

13. Verfahren nach Anspruch 12, **dadurch gekennzeichnet, dass** der natürliche Hektorit Natriumhektorit ist.

## Revendications

1. Formulation de peinture métallique automobile, comportant :
a) au moins 0,1 % d'une argile d'hectorite naturelle ; et
b) de 0,5 à 15 % en poids, sur la base du poids de l'argile, d'un ou de plusieurs additifs de phosphonate ;
c) des flocons à effet métallique sélectionnés dans le groupe comprenant de l'aluminium, du cuivre, du mica ou des pigments d'interférence et leurs mélanges; et
d) de l'eau.

2. Formulation de peinture métallique selon la revendication 1, dans laquelle ladite formulation est une formulation de peinture métallique par pulvérisation.

3. Formulation de peinture métallique selon la revendication 1, dans laquelle l'hectorite naturelle est sélectionnée dans le groupe comprenant de l'hectorite de calcium et de l'hectorite de sodium.

4. Formulation selon la revendication 1, dans laquelle l'hectorite naturelle est de l'hectorite de sodium.

5. Formulation de peinture selon la revendication 1, dans laquelle l'additif de phosphonate est sélectionné dans le groupe comprenant :
(a) des composés d'acide phosphonique qui contiennent au moins deux fragments ayant la structure : 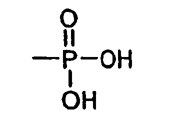 et leurs sels,
(b) des composés d'acide phosphonique qui contiennent au moins deux fragments ayant la structure : 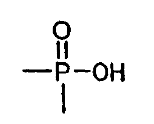 et leurs sels,
(c) des composés qui peuvent former des acides phosphoniques ou phosphiniques, ou leurs sels, sous la condition d'une utilisation lors de la réalisation de ces formulations de peinture, et
(d) les sels de lithium, sodium, potassium, calcium ou magnésium des composés décrits sous (a) et (b).

6. Formulation de peinture selon la revendication 1, comportant en outre un additif rhéologique gonflant en présence d'alcalis.

7. Formulation selon la revendication 1, dans laquelle l'hectorite naturelle est de l'hectorite de sodium, et le composé de phosphonate est sélectionné dans le groupe comprenant :
a) des acides diphosphoniques de la formule R¹R²C(PO(OH)₂)₂ et leurs sels,
b) des acides diphosphoniques de la formule
R¹-CR²(PO(OH)₂-R³-CR²PO(OH)₂-R⁵ et leurs sels,
c) des acides phosphoniques avec la formule générale
R¹R⁴C=C(PO(OH)₂)₂ et leurs sels, et
d) les sels de lithium, sodium, potassium, calcium et magnésium des composés décrits sous a), b) et c),
où R¹ est sélectionné dans le groupe comprenant H, un alkyle linéaire ou ramifié, de l'alcène, de l'hydroxyalkyle, de l'aminoalkylhydroxyalcène, de l'aminoalcène avec 1 à 22 atomes de carbone ou un aryle, hydroxyaryle, aminoaryle avec 6 à 22 atomes de carbone ; R² est sélectionné dans le groupe comprenant R¹ et OH ; R³ est un alkyle avec 0 à 22 atomes de carbone ; et R⁴ et R⁵ sont sélectionnés dans le groupe R¹.

8. Formulation selon la revendication 1, dans laquelle l'additif de phosphonate est sélectionné dans le groupe comprenant un sel de sodium d'acide 1-hydroxyéthylène-1,1-diphosphonique, ou un ester de celui-ci.

9. Formulation selon la revendication 8, dans laquelle l'hectorite naturelle est de l'hectorite de sodium.

10. Formulation de peinture selon la revendication 1, comportant :
a) de 0,1 à 10 % en poids d'argile d'hectorite naturelle ; et
b) de 0,5 à 6 % en poids, sur la base du poids de l'argile d'hectorite naturelle, d'un ou de plusieurs additifs de phosphonate.

11. Procédé pour réaliser une formulation de peinture selon l'une quelconque des revendications précédentes, comportant les étapes consistant à :
a) traiter un mélange d'hectorite naturelle et d'eau avec un ou plusieurs additifs de phosphonate ; et
b) ajouter un tel mélange traité à la formulation de peinture.

12. Procédé pour réaliser une formulation de peinture selon la revendication 11, comportant les étapes consistant à :
a) traiter un mélange d'hectorite naturelle et d'eau avec un ou plusieurs additifs de phosphonate pour former une suspension d'argile ; et
b) sécher le mélange traité ; et
c) ajouter un tel mélange traité à la formulation de peinture.

13. Procédé selon la revendication 12, dans lequel l'hectorite naturelle est de l'hectorite de sodium.
